(19) Europäisches Patentamt
European Patent Office
Office européen des brevets

(11) **EP 2 072 915 A2**

(12) **EUROPÄISCHE PATENTANMELDUNG**

(43) Veröffentlichungstag:
24.06.2009 Patentblatt 2009/26

(51) Int Cl.:
*F24D 5/10* (2006.01)   *F24D 11/00* (2006.01)

(21) Anmeldenummer: 08022021.3

(22) Anmeldetag: **18.12.2008**

(84) Benannte Vertragsstaaten:
**AT BE BG CH CY CZ DE DK EE ES FI FR GB GR
HR HU IE IS IT LI LT LU LV MC MT NL NO PL PT
RO SE SI SK TR**
Benannte Erstreckungsstaaten:
**AL BA MK RS**

(30) Priorität: **21.12.2007   AT 20922007**

(71) Anmelder: **Popa, Danut**
**8482 Gosdorf (AT)**

(72) Erfinder: **Popa, Danut**
**8482 Gosdorf (AT)**

(54) **Thermische Solaranlage**

(57) Thermische Solaranlage bestehend aus mindestens einem Sonnenkollektor - der auch ein Fassadenkollektor oder eine transparente Wärmedämmung sein kann - und einer Einrichtung zum Transport der Sonnenwärme mit Hilfe eines Wärmeträgers zwecks Wärmegewinnung für ein Gebäude, **dadurch gekennzeichnet, dass** die mit Hilfe eines Sonnenkollektors -beispielsweise eines Fassadenkollektors (11) - oder einer transparenten Wärmedämmung gewonnene Sonnenenergie mittels Wärmeträger - zumindest für eisen zeitlich begrenzten Arbeitszyklus - in den Bereich zwischen der massiven Außenwand des Gebäudes (1) und ihrer Wärmedämmung (4) übertragen und/ oder der Wärmeträger in den in eine andere Ilimmelsrichtung gerichteten Bereich zwischen der massiven Außenwand des Gebäudes und ihrer Wärmedämmung weitergeleitet wird.

Fig. 4

EP 2 072 915 A2

**Beschreibung**

Die Erfindung betrifft eine thermische Solaranlage bestehend aus mindestens einem Sonnenkollektor - der auch ein Fassadenkollektor oder eine transparente Wärmedämmung sein kann - und einer Einrichtung zum Transport der Sonnenwärme mit Hilfe eines Wärmeträgers zwecks Wärmegewinnung für ein Gebäude.

Einrichtungen zur Gewinnung von Sonnenwärme existieren bereits seit geraumer Zeit und sind allgemein bekannt. Sie bestehen aus zumindest einem Sonnenkollektor und einer Einrichtung zum Transport der Wärme zu einem Speicher, einem Wärmetauscher oder direkt in ein Gebäude, wo die Temperatur erhöht werden muss. Die Temperatur des Wärmeträgers muss höher als die Temperatur des aufzuheizenden Gebäudes sein. Ein besonderer Fall stellt die transparente Wärmedämmung dar, die praktisch als Fassadenkollektor funktioniert wo üblicherweise eine schwarz gestrichene Außenwandfläche als Absorber dient und die Wand selbst die Funktion des Wärmeträgers und Speichers übernimmt.

Die Sonnenkollektoren weisen den Nachteil auf, dass der Wärmeträger eine höhere Temperatur als das Innere des Gebäudes haben muss und dadurch können die diffuse und die öfters während der Heizperiode vorhandene schwache Sonneneinstrahlung nicht verwenden.

Die transparenten Wärmedämmungen weisen den Nachteil auf, dass die Fassadentemperatur - während der Übergangszeiten, bei tief stehender Sonne - Werte um 70-80°C erreichen kann, was für die Wandmaterialien eine große Beanspruchung darstellt.

Die vorliegende Erfindung hat somit zwei Aufgaben:

    1. eine Lösung für die Vermeidung der Fassadenüberhitzung bei Verwendung der transparenten Wärmedämmungen und
    2. die Verwendung der Energie des Wärmeträgers eines Sonnenkollektors auch wenn seine Temperatur niedriger als die Temperatur des aufzuheizenden Gebäudes ist.

Diese zwei Aufgaben werden erfindungsgemäß dadurch gelöst, dass die von einem Sonnenkollektor oder einer transparenten Wärmedämmung gewonnenen Sonnenenergie mit Hilfe eines Wärmeträgers - zumindest für einen zeitlich begrenzten Arbeitszyklus - in den Bereich zwischen der Außenwand des Gebäudes und ihrer Wärmedämmung auf die Außenwand übertragen wird.

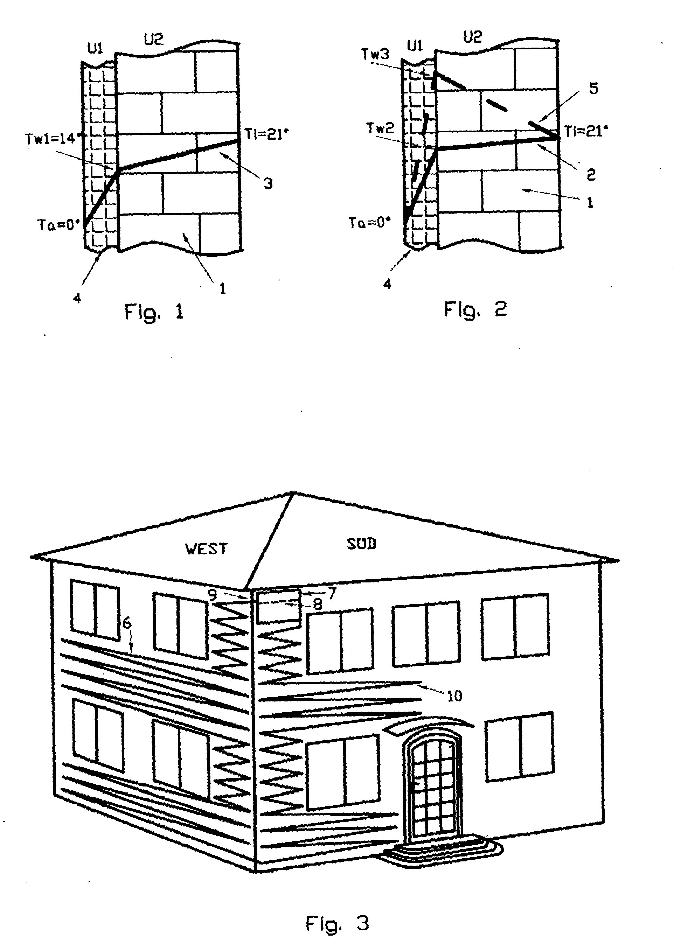

Es wird zwecke Vereinfachung angenommen dass eine Außenwand 1 in Fig. 1 mit einer Wärmedämmung 4 vorgesehen ist, wobei die Außenwand einen Wärmedurchgangskoeffizienten U2 und die Dämmung 4 einen Wärmedurchgangangskoeffizienten U1 aufweist, wo U2 =U 1 * 2; weiters, die Wandinnentemperatur Ti 21 ° C und die Außentemperatur Ta 0° C beträgt. Der Temperaturverlauf in der Wand und in der Wärmedämmung wird vereinfacht mit der dicken Linie 3 in Fig. 1 dargestellt und die Temperatur Tw1 der Wandaußenfläche beträgt in diesem Fall 14° C. Die Wärmeverluste der Wand pro Quadratmeter sind: Q = U2*(Ti - Tw1). Um eine Solaranlage für die Erwärmung des Gebäudes zu verwenden ist für die bekannten Systeme eine Wärmeträgertemperatur > 21° C zwingend notwendig.

Wenn der Wärmeträger eines Solarkollektors eine höhere Temperatur als die Temperatur Tw1 in Fig. 1 aufweist, kann er verwendet werden um die Temperatur der Wandaußenfläche zu erhöhen und den thermischen Gleichgewicht im Bereich der Trennschicht Wand - Dämmung zu zerstören. Es wird einen neuen Temperaturverlauf zwischen Ti und Ta erreicht, so wie vereinfacht in Fig. 2 dargestellt. Wenn - wie in Fig. 2, Kennlinie 2 - die Wandaußenfläche auf die Temperatur Tw2 < Ti aber Tw2>Tw1 kann bereits ein Wärmegewinn dem. Verfahren zugerechnet werden: es geht um die Verringerung der Wärmeverluste/qm durch die Wand 1 von Q1 = U2*(Ti - Tw1) auf Q2 = U2*(Ti - Tw2). Das Gebäude verliert weniger Energie und der Energiegewinn Q ist:

$$Q = Q1 - Q2 = U2*(Tw2 - Tw1).$$

Wenn die Temperatur der Wandaußenfläche in unserem Beispiel aus Fig. 1 und Fig. 2 bis auf 21° C erhöht werden kann, dann sind die Gebäudeverluste null und das Gebäude verhält sich als ob eine Wärmedämmung mit unendlicher Dicke vorhanden wäre. Dem System kann ein Wärmegewinn von (21° - 14°)*U2 = 7*U2 Watt zugerechnet werden, und zwar die Wärme die sonst durch die Wand verloren gegangen wäre. Das allerdings mit einem Energieverbrauch von (21° - 01)*U1 = 21*U1 Watt, der von dem Wärmeträger dem Sonnenkollektor entnommen werden muss. In unserem Fall, wo U2 = 2*U1, ergibt sich einen Wirkungsgrad von 66%; bei der thermischen Sanierung von älteren Gebäuden können U2/U1 - Verhältnisse von ungefähr 1/4 problemlos erzielt werden und damit einen Wirkungsgrad von 80%.

Bemerkenswert ist, dass die herkömmlichen Verfahren bei dieser Temperatur noch keinen Ertrag bringen könnten.

Wenn in Fig. 2 die Temperatur der Wandaußenfläche Tw3 > Ti wird - wie mit der Kennlinie 5 dargestellt - dann fließt sogar Wärme ins Gebäude und dem Verfahren wird diese Wärme zuzüglich die ursprünglichen Verluste zugeschrieben. Der Wirkungsgrad ist proportional zu U2/(U1+U2), also je schlechter (größer) der Wärmeübergangskoeffizient U2 einer Außenwand, desto besser ist die vorgeschlagene Lösung für ein gegebenes Gebäude. Damit kann dieses Verfahren besonders gut im Bereich der Wärmebrücken und für die thermischen Altbausanierungen verwendet werden.

In Fig. 3 wird eine Lösung für die Überhitzungsproblematik der transparenten Wärmedämmung (TWD) dargestellt: die Süd- und Westfassade sind mit Leitungen 10 bzw. 6 vorgesehen, die mit dem Behälter 7 verbunden sind. Die Leitungen 6 und 10 sind mit den Außenwänden thermisch gekoppelt. Der Wandbereich mit der Leitung 10 (die Südseite) wird beispielsweise mit TWD und der Wandbereich mit der Leitung 6 (die Westseite) mit opaken Wärmedämmung abgedeckt. Der Behälter 7 kann als schaltbare Wärmebrücke zwischen der Süd- und Westfassade verwendet werden indem das Niveau 8 des Wärmeträgers so gewählt wird, dass der Anschluss 9 der Leitung 6 erst über eine bestimmte Wärmeträgertemperatur in Leitung 5 durch die Ausdehnung der Flüssigkeit erreicht wird. Das System kann sich damit selbständig regeln aber es könnte auch eine Umwälzpumpe verwendet werden. Der Behälter 7 kann auch die Aufgabe eines Ausdehnungsgefäßes übernehmen. Die Westfassade könnte auch mit TWD vorgesehen werden und über den Wärmeträger findet ständig einen Temperaturausgleich zwischen der Süd- und Westfassade, je nach Sonnenposition. Die Ost- und/oder die Nordfassade können ähnlich wie die Westfassade in Fig. 3 verwendet werden.

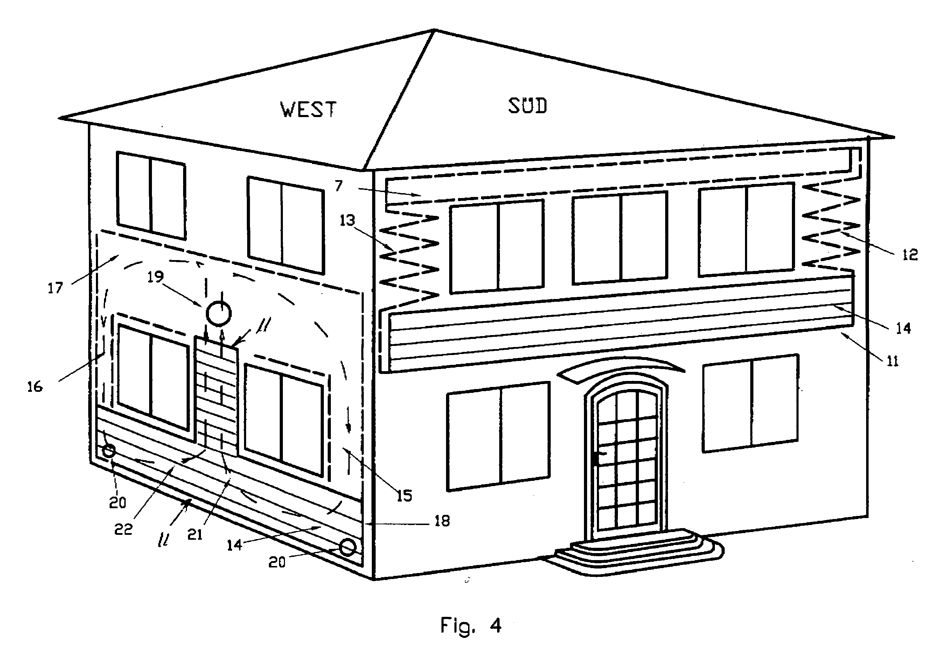

Ein Beispiel für eine vorteilhafte Anwendungsmöglichkeit wird in Fig. 4 dargestellt: ein Sonnenkollektorfeld 1 wandelt die Sonneneinstrahlung in Wärme um, während sich eine aus den Leitungen 12 und 13 bestehende Wandheizung und ein Behälter 7 unter der Wärmedämmung befinde. Wenn die Temperatur des Wärmeträgers im Sonnenkollektor 11 über die Temperatur Tw1 unter der Wärmedämmung steigt, bewegt sich der Wärmeträger wegen der Änderung der Dichte und entsteht ein Kreislauf über die Wandheizung 12 nach Behälter 7 und weiter über die Wandheizung 13 zurück in Sonnenkollektor 11; wenn die Temperatur im Sonnenkollektor sinkt, hört die Umwälzung des Wärmeträgers auf. Der Sonnenkollektorfeld 11 befindet sich idealerweise im Bereich einer Betondecke und der Behälter 7 im Bereich einer anderen Betondecke, wo der Wärmeübergangskoeffizient der Wand höher (schlechter) ist. Statt Behälter 7 kann eine Leitung für Wandheizung verwendet werden; ein nicht gezeichnetes Ausdehnungsgefäß ist notwendig und eine Umwälzpumpe kann auch eingesetzt werden. Statt Sonnenkollektorfeld 11 kann eine Leitung für Wandheizung und statt Glasabdeckung eine Transparente Wärmedämmung verwendet werden. Die Warme kann auch auf in andere Himmelsrichtungen orientierte Gebäudewände geführt werden - wie beispielsweise in Fig. 3 - wobei die Verwendung einer oder mehreren Umwälzpumpen als sinnvoll erscheint. Der Strom für die Umwälzpumpe kann von Solarzelle erzeugt werden und damit funktioniert die Pumpe nur wenn genügend Sonnenstrahlung vorhanden ist. Es können auch Luftkanale 22 und 23 und einen Hohlraum 17 unter der Wärmedämmung gebildet, falls Luftkollektoren 18 verwendet werden (die Westwand in Fig. 4, wo sich die warme Luft in etwa in die Richtungen 21 und bzw. 22 bewegt). Bei höheren Temperaturen kann die Wärme direkt der Heizung in Inneren des Gebäudes oder eines üblichen Speichers zugeführt werden. Für die Variante mit Warmluft in Fig. 4 werden dafür ein Ventilator 19 und eine oder mehrere Wandlöcher 20 verwendet; der Ventilator kann mit Solarzellen, ähnlich wie oben für die Umwälzpumpe beschrieben, betrieben werden. Ein Temperatursensor oder ein Thermokontakt auf dem Sonnenkollektor 11 und/oder entsprechende Elektronik könnten die Pumpe oder Ventilatoren - eventuell in Abhängigkeit von der Temperatur zwischen der Wand und der Wärmedämmung - einschalten und ausschalten.

Im Sommer können die Jalousien 14 geschlossen sein und die Leitungen 12, 13 und der Behälter 7 für die Kühlung des Gebäudes verwendet werden indem der Wärmeträger beispielsweise in einem Fluss, in Erde, in einem Brunnen, etc. gekühlt wird. Wenn Luft als Wärmeträger verwendet wird, dann können die Wände im Sommer nachts mit frischer Luft gekühlt werden.

Mit den Merkmalen des Anspruchs 1 wird erreicht, dass die Sonnenkollektoren bei niedrigeren Temperaturen verwendet werden können, wenn beispielsweise der Himmel (teil)bewölkt ist. Ein Nebeneffekt der Möglichkeit der Snnnenkollektoren bei niedriger Temperatur arbeiten zu können ist die Steigerung des Wirkungsgrades der Sonnenkollektoren da ihre Verluste geringer werden und das gerade in der Heizsaison, wo die Sonneneinstrahlung auch beim klaren Himmel schwächer ausfällt.

Mit den Merkmalen des Anspruchs 2 wird erreicht, dass Wärme direkt ins Gebäude geführt werden kann, wenn das notwendig ist.

Mit den Merkmalen des Anspruchs 3 wird erreicht, dass der Verlauf der Prozesse automatisiert werden kann.

Mit den Merkmalen des Anspruchs 4 wird erreicht, dass die Sonnenkollektorcn - eventuell automatisch - gegen zu hohe Temperaturen geschützt oder komplett abgeschattet werden können.

Mit den Merkmalen des Anspruchs 5 wird erreicht, dass die Anlage für eine Klimatisierung des Gebäudes über das ganze Jahr verwendet werden kann.

Fig. 1 zeigt den Temperaturverlauf in einer Außenwand 1 eines Gebäudes mit Wärmedämmung.

Fig. 2 zeigt den geänderten Temperaturverlauf in einer Außenwand mit Wärmedämmung, wenn in Bereich zwischen Wand und Wärmedämmung Wärme zugeführt wird.

Fig. 3 zeigt eine Möglichkeit für die Führung der Wärme von der südlichcn Außenwand eines Gebäudes zur westlichen Außenwand oder umgekehrt um die Übertemperierung unter einer transparenten Wärmedämmung zu vermeiden.

Fig. 4 zeigt eine Möglichkeit für die Führung der Sonnenwärme unter der Wärmedämmung oder ins Gebäude mit Hilfe einer Flüssigkeit auf der Südfassade und mit Hilfe der warmen Luft auf der Westfassade eines Gebäudes.

**Patentansprüche**

1. Thermische Solaranlage bestehend aus mindestens einem Sonnenkollektor - der auch ein Fassadenkollektor oder eine transparente Wärmedämmung sein kann - und einer Einrichtung zum Transport der Sonnenwärme mit Hilfe eines Wärmeträgers zwecks Wärmegewinnung für ein Gebäude, **dadurch gekennzeichnet, dass** die mit Hilfe eines Sonnenkollektors -beispielsweise eines Fassadenkollektors (11) - oder einer transparenten Wärmedämmung gewonnene Sonnenenergie mittels Wärmeträger - zumindest für einen zeitlich begrenzten Arbeitszyklus - in den Bereich zwischen der massiven Außenwand des Gebäudes (1) und ihrer Wärmedämmung (4) übertragen und/ oder der Wärmeträger in den in eine andere Himmelsrichtung gerichteten Bereich zwischen der massiven Außenwand des Gebäudes und ihrer Wärmedämmung weitergeleitet wird.

2. Thermische Solaranlage nach Anspruch 1 **dadurch gekennzeichnet, dass** der Wärmeträger ins Gebäudeinnere oder zu einem Wärmespeicher geführt werden kann.

3. Thermische Solaranlage nach Anspruch 1 **dadurch gekennzeichnet, dass** die Zirkulation des Wärmeträgers in Abhängigkeit von der Sonnenkollektortemperatur und/oder der Temperatur zwischen der Wand und der Wärmedämmung gesteuert wird.

4. Thermische Solaranlage nach Anspruch 1 **dadurch gekennzeichnet, dass** der Sonnenkollektor mit einer Beschattungseinrichtung, beispielsweise eine Jalousie (14), versehen wird.

5. Thermische Solaranlage nach Anspruch 1 **dadurch gekennzeichnet, dass** der Wärmeträger und die entsprechenden Leitungen oder Luftkanäle während der warmen Zeit für die Gebäudekühlung verwendet werden.

Fig. 1

Fig. 2

Fig. 3

Fig. 4